# NEUE EUROPÄISCHE PATENTSCHRIFT

(11) **EP 2 077 935 B2**
(45) Veröffentlichungstag und Bekanntmachung des Hinweises auf die Entscheidung über den Einspruch: **31.07.2019**
(45) Hinweis auf die Patenterteilung: 29.06.2016
(21) Anmeldenummer: 07802382.7
(22) Anmeldetag: 18.07.2007
(51) Int. Cl.: B29C 41/08, B29C 41/28, B29C 41/22, B29C 41/46, B29L 31/30, B29C 41/18, B29C 41/36

(54) **VERFAHREN ZUR HERSTELLUNG VON FORMHÄUTEN AUS MEHREREN KUNSTSTOFFEN**
METHOD FOR THE PRODUCTION OF MOLDED SKINS FROM MULTIPLE PLASTICS
PROCÉDÉ DE FABRICATION DE PEAUX MOULÉES CONSTITUÉES DE PLUSIEURS MATIÈRES SYNTHÉTIQUES

(30) Priorität: 30.09.2006 DE 102006046590
(43) Veröffentlichungstag der Anmeldung: 15.07.2009
(73) Patentinhaber: Johnson Controls Interiors GmbH & Co. KG, 47929 Grefrath (DE)
(72) Erfinder: WALTER, André, 29699 Bomlitz (DE); DALIBOR, Harald, 30826 Garbsen (DE); HEIDKAMP, Michael, 29386 Dedelsdorf (DE); JACOBY, Hans-Bernd, 31547 Rehburg-Loccum (DE); PARZELSKI, Zbigniew, 38302 Wolfenbüttel (DE); SANDER, Marco, 31249 Hohenhameln (DE)
(74) Vertreter: Trinks, Ole
(86) Internationale Anmeldenummer: PCT/EP2007/057415
(87) Internationale Veröffentlichungsnummer: WO 2008/037520

(56) Entgegenhaltungen:
- EP-A2- 0 339 222
- WO-A2-2007/071207
- CZ-B6- 298 640
- FR-A- 2 763 535
- JP-A- 3 055 219
- JP-A- 10 095 250
- JP-A- 11 348 057
- JP-A- 59 159 309
- JP-A- 59 192 524
- JP-A- 60 208 210
- JP-A- H08 120 486
- US-A- 4 925 151
- US-A- 5 432 222
- US-A- 5 922 256
- US-A1- 2004 099 988

## Beschreibung

Die Erfindung betrifft ein Verfahren zur Herstellung von Kunststoff-Formhäuten, insbesondere für Kraftfahrzeuginnenteile wie z.B. Armaturenbretter und Türverkleidungen, wobei die Kunststoff-Formhäute durch ein nacheinander erfolgendes mehrfaches kontinuierliches Anschmelzen von mehreren Kunststoffpulvern unterschiedlicher Eigenschaft an Oberflächenbereichen eines erwärmten Formwerkzeuges aufgebaut werden und die mit Kunststoffpulver unterschiedlicher Eigenschaft versehenen Bereiche der Oberfläche durch auf der Oberfläche des Formwerkzeuges vorspringende Stege voneinander getrennt sind, wobei mindestens einer der durch die Stege begrenzten Bereiche der Oberfläche während eines Anschmelzen eines ersten Kunststoffpulvers mit einer Abdeckung oder Maske versehen wird, die in ihren Randbereichen mit einer Dichtung versehen ist und auf den Stegen aufliegt.

Verfahren zur Herstellung zweifarbiger Kunststoff-Formhäute mit der "Maskentechnik" sind bekannt.

Die EP 0 972 625 A1 beschreibt hierzu eine Einrichtung, nämlich eine Werkzeugform zur Herstellung von zweifarbigen Kunststoff-Formhäuten für Kraftfahrzeugteile, d.h. im Wesentlichen Armaturenbretter, Türverkleidungen etc. Das hier angewandte Herstellungsverfahren zur Erzeugung von Sinterfolien / Slushhäuten ist ein Rotationssintern, bei dem sich ein Kunststoffpulver in der rotierenden Werkzeugform befindet und an entsprechend geheizten Wandteilen der Werkzeugform anschmilzt.

Die hier gezeigte Einrichtung weist zwei verschiedene untere Teile der Werkzeugformkästen auf. Die unteren Teile der Werkzeugformkästen, welche jeweils auch das Pulverbett beinhalten, sind lösbar angeordnet in Bezug auf den einzigen oberen Werkzeugformkasten, an welchen das Kunststoffpulver anschmilzt. Für die Herstellung von zweifarbigen Kunststoff-Formhäuten weist nun der erste untere Formkasten einen schalenförmige und in den Innenraum ragenden Vorsprung auf, mit dem - wie mit einer Maske - Teile des oberen Formkastens abgedeckt werden.

In einem ersten Arbeitsgang wird durch Rotationssintern ein Pulver einer ersten Farbe angeschmolzen, wobei die unter der schalenförmigen Abdeckung liegenden Bereiche des oberen Formkastens nicht getroffen werden und somit frei von Pulver bleiben.

Vor einem zweiten Arbeitsgang wird der erste untere Formkasten durch einen zweiten unteren Formkasten ersetzt, der ein Pulver einer anderen Farbe beinhaltet und keine Abdeckungen aufweist. Beim nachfolgend wiederholten Rotationssintern schmilzt an dem vorher freigehaltene Bereich des oberen Formkastens und auf der Rückseite der schon bestehenden Formhaut das Pulver mit der neuen Farbe an. Nach Abkühlung und Entnahme der Formhaut aus dem Werkzeug erhält man auf der dem Werkzeug zugewandten und zukunftigen Außenseite eine zweifarbige Kunststoff-Formhaut.

Während des ersten Arbeitsschrittes muß die hierzu die schalenförmige und in den Innenraum ragende Abdeckung des unteren Formkasten sorgsam gegenüber dem oberen Formkasten abgedichtet werden, damit kein Sinterpulver der ersten Farbe in den Abdeckbereich gelangt. Hierzu weist der schalenförmige Vorsprung an seine Rändern Dichtungselemente auf, die elastisch und oder/innen hohl ausgebildet sind und ggf. innen mit Druck oder elastischen Medien beaufschlagt werden können.

Von Nachteil sind hierbei der hohe Arbeitsaufwand zum Wechsel der unteren Kastenformen sowie die schwierige Dichtung der Maske, d.h. der Dichtung zwischen den Rändern der schalenförmigen und in den Innenraum ragenden Abdeckung des unteren Formkasten und der Innenseite des oberen Formkastens. Hierbei führen Wärmedehnungen und unterschiedliche und durch komplizierte Innenformen des oberen Formkastens bedingte Druckverhältnisse der Dichtungen zu Undichtigkeiten und unregelmäßiger Anlage, wodurch die Farbgrenzen verwischen können.

Ähnlich verhält es sich bei dem durch die WO 2004/082917 offenbarten Pulversinterverfahren mit mehreren Bepulverungsschritten. Bei diesem Verfahren ist die Verwendung einer Maske und einer an der Maske befindlichen aufblasbaren Dichtung erfindungswesentlich, die seitlich an und zwischen Begrenzungsstegen anliegt und durch das Aufblasen die Maske selbsttätig festklemmt. So wird zunächst bei eingespannter Maske ein erster Bepulverungsschritt durchgeführt, danach die Maske entnommen und ein weiteres Mal ein Pulversintern durchgeführt. Auch wenn hier die dazu erforderlichen Pulverkästen an sich einfacher aufgebaut sein können, so ist doch die Handhabung mehrerer schwerer Kästen mit unterschiedlichen Pulverarten in der Serienherstellung eher als Nachteil anzusehen.

Die US 5,234,653 beschreibt ein Verfahren zur Herstellung von mehrfarbigen Kunststoff-Formhäuten durch Sintern, bei dem sich ein Kunststoffpulver in einer durch Trennwände aufgeteilten Werkzeugform befindet und an entsprechend geheizten Wandteilen der Werkzeugform anschmilzt. Die Fixierung der Trennwände erfolgt dabei über Drucksysteme innerhalb der Trennwände. Durch das Drucksystem werden die Trennwände mit Hilfe von Dichtungsprofilen zwischen untere und obere Werkzeugform verspannt und sorgen so für eine sichere Abdichtung bei den jeweiligen Sintervorgängen mit unterschiedlichen Farbpulvern.

Auch hier besteht ein Nachteil darin, dass eine relativ umständliche Fixierung der Trennwände vorgenommen werden muß und zusätzlich eine hohe Druckkraft für die Drucksysteme erforderlich ist.

Die DE 694 28 377 T2 offenbart ein Verfahren und eine Vorrichtung zur Durchführung eines Sprühformprozess für ein Zwei-Farb-Verfahren, bei dem eine Maske oben auf einen Steg aufgelegt wird, welcher bestimmte Bereiche einer Sprühform begrenzt und von den übrigen Oberflächenbereichen abtrennt. Die Maskenränder stehen dabei zur Sprühseite etwas über. Das elastomere Sprühmaterial, wird dann auf eine Seite der hervorstehenden Kante gespritzt. Danach wird die Maske abgenommen und ein anderes elastomeres Material, beispielsweise eines mit einer anderen Farbe aufgesprüht. Offenbart ist anhand der in den Ausführungsbeispielen beschriebenen Materialen ein Verfahren zum Sprühen flüssiger Komponenten. Sprühverfahren mit mehreren unterschiedlichen flüssigen Materialien sind jedoch allein aufgrund der erforderlichen Lösungsmittelmengen nicht einfach in industriellen Serien-Herstellungsprozessen zu handhaben.

Die JP 11 348057 A offenbart ein Verfahren zum Formen komplexer, großflächiger, mehrfarbiger Flächen aus Harzen, wobei klare Farbgrenzen ohne Vermischung der Farben untereinander erzielt werden. Dabei ist eine Formoberfläche einer Form durch eine Maskierungsplatte in eine erste Harzschichtformungsoberfläche und eine zweite Harzschichtformungsoberfläche geteilt. Eine erste Harzschicht wird durch Aufsprühen eines ersten Harzpulvers auf die erste Harzschichtformungsoberfläche unter Hitze gebildet. Anschließend wird die Maskierungsplatte von der Form entfernt. Anschließend wird die sich erhitzte Form mit einem Behälter kombiniert, der mit einem vom ersten Harzpulver farblich verschiedenen zweiten Harzpulverbefüllt ist. Die sich ergebende Kombination wird rotiert, so dass sich eine zweite Harzschicht bildet, die auf der inneren Oberfläche der ersten Harzschicht und der zweiten Harzschichtformungsoberfläche haftet.

Die JP 60 208210 A offenbart ein Verfahren zur Herstellung eines mehrfarbigen Kunstharzkörpers, bei dem eine Verfahrenstemperatur während des Aufsprühens eines ersten Kunstharzpulvers konstant gehalten und anschließend erhöht wird, wobei ein zweites Kunstharzpulver durch Rotationssintern aufgebracht und die Verfahrenstemperatur anschließend weiter angehoben wird.

Der Erfindung lag also die Aufgabe zugrunde, ein Verfahren zur Herstellung von Kunststoff-Formhäuten aus bereichsweise unterschiedlichen Kunststoffen, also beispielsweise zur Herstellung von zweifarbigen Kunststoff-Formhäuten mittels Sintern, das eine Kunststoff-Formhaut hoher Qualität und eine exakte Farbtrennung ohne Verwischen der einzelnen Kunststoffbereiche, respektive Farbbereiche sicherstellt, bei welchem eine Abdeckung oder Maske leicht aufzubringen und zu entfernen ist, wobei die Abdeckung oder Maske in ihren Randbereichen mit einer Dichtung versehen ist, so zu verbessern, dass die Lebensdauer der Dichtung verlängert wird.

Gelöst wir diese Aufgabe durch die Merkmale des Hauptanspruchs. Vorteilhafte Weiterbildungen sind in den Unteransprüchen erfasst.

Im Hinblick auf das erfindungsgemäße Verfahren wird eine Kombination verschiedener Sinterverfahren in einem einzigen Herstellungsprozess in der Form kombiniert, dass
a) zunächst das erste Kunststoffpulver mittels Pulversprühverfahren auf das Formwerkzeug aufgebracht wird, wobei das Formwerkzeug während des Sprühens auf eine ersten Temperatur gehalten wird,
b) die Temperatur des Formwerkzeuges danach so erhöht wird, dass das im Sprühverfahren aufgebrachte erste Kunststoffpulver an den nicht maskierten Bereichen des Formwerkzeuges durch Anschmelzen haftet,
c) die Abdeckung oder Maske von der Oberfläche des Formwerkzeuges entfernt wird,
d) das Formwerkzeug danach auf eine ein zweites Kunststoffpulver enthaltende Pulverwanne aufgesetzt und mit letzterer dicht verschlossen wird, wobei die Formoberfläche des Formwerkzeuges zum Innenraum der Pulverwanne zeigt,
e) Formwerkzeug und Pulverwanne so in Bewegung/Rotation gebracht werden, dass das zweite Kunststoffpulver über die Formoberfläche des Formwerkzeuges rieselt oder fließt, wobei das zweite Kunststoffpulver durch Rotationssintern an der Formoberfläche des Formwerkzeuges und an dem ersten Kunststoffpulver durch Anschmelzen haftet,
f) die Temperatur des Formwerkzeuges so erhöht wird, dass das erste und das zweite Kunststoffpulver vollständig ausreagiert und zu einer homogenen Kunststoff-Formhaut verschmilzt,
g) das Formwerkzeug von der Pulverwanne entfernt und danach so gekühlt wird, dass die homogene Kunststoff-Formhaut aus dem Formwerkzeug entnommen werden kann.

Durch die erfindungsgemäße Verfahrensausbildung mit einem vorlaufenden Pulver-Sprühprozess eines ersten Kunststoffpulvers und einem nachlaufenden Pulver-Rotations-Sinterprozess (Slush-Prozess) eines zweiten Kunststoffpulvers, bei dem die Maskenabdeckung nur während des Pulver-Sprühprozess erfolgt, ergibt sich in der Verfahrensdurchführung zunächst der Vorteil, dass die Masken leicht von außen in der Werkzeugform fixiert werden können, ggf. sogar nur leicht durch einen Handhabungsautomaten gegen die entsprechenden Bereiche der Form gedrückt werden, während das Umsprühen der Maske erfolgt. Weiterhin erfordert dieser Pulver-Sprühprozess außer einer entsprechend eingerichteten und ggf. robotergeführten Sprüheinrichtung/Sprühpistole keinen größeren maschinellen Aufwand und lässt mangels schwerer bewegter Maschinenteile hohe Taktzeiten in der Serienherstellung realisierbar werden.

Dabei braucht also nur das zweite Kunststoffpulver mit Hilfe eines Pulverkastens im Verfahren manipuliert zu werden, so dass auch nur dieser eine Pulverkasten in der maschine bewegt werden muss, und nicht etwa mehrere Pulverkästen, wie dies bei Rotations-Sinterprozessen im Stand der Technik der Fall ist. Die Anzahl der "schweren" Maschinenteile reduziert sich also durch das erfindungsgemäße Verfahren. Dadurch wird insgesamt eine Automatisierung des Verfahrens deutlich erleichtert und die Serientauglichkeit im Sinne hoher Taktzeiten und Auslastung - wie bereits dargestellt - wesentlich erhöht. Die entsprechenden Temperaturführungen unterstützen dabei die sichere Verfahrensführung.

Man erreicht darüber hinaus eine exakte Trennung der beiden angeschmolzenen Kunststoffpulver, also etwa eine saubere Farbtrennung ohne Verwischen der einzelnen Farb-Bereiche und vermeidet das bei den üblichen mehrfachen Rotations-Sinterverfahren übliche Einbrechen und Verlaufen von Pulveranhäufungen. Bei den bisher bekannten Verfahren baut sich nämlich an den Rändern von Abdeckschalen eine Häufung der Pulverschüttung und somit eine Verdickung der Pulverschicht auf, die nach Abheben der Abdeckung in Richtung auf die abgedeckten Bereiche einbricht und den Farbverlauf verwischt. Bei dem erfindungsgemäßen Verfahren verhindert das Sprühen des ersten Kunststoffpulvers den Aufbau von solchen Verdickungen. Der Sprühprozess sollte dabei nicht zu lang dauern und etwa 180 Sekunden nicht überschreiten.

Wie bereits ausgeführt, besteht eine vorteilhafte Ausbildung darin, dass die Kunststoffpulver als unterschiedliche Eigenschaft eine unterschiedliche Farbe aufweisen. Hierdurch lassen sich dann auf einfache Weise und mit den beschriebenen Vorteilen z.B. Armaturenbretter herstellen, deren oberer und der Windschutzscheibe zugewandter Teil in einer Farbe und mit einer Pigmentierungsdichte so ausgeführt wird, das störende Reflexionen des Sonnenlichtes vermieden werden.

Eine weitere vorteilhafte Ausbildung besteht darin, dass die Kunststoffpulver als unterschiedliche Eigenschaft eine unterschiedliche Dichte und / oder Schaumigkeit aufweisen. Somit lassen sich auf einfache Weise Oberflächen erzeugen, die etwa in unterschiedlichen Bereichen eine jeweils andere Anmutung oder Haptik aufweisen.

Eine weitere vorteilhafte Ausbildung besteht darin, dass während des Pulversprühens im Verfahrenschritt a) die Temperatur des Formwerkzeuges 190 bis 210°C, vorzugsweise 195°C beträgt. Damit erreicht man im Zusammenwirken mit der kinetischen Energie des Sprühverfahrens und der weiteren Verfahrensausbildung, dass nämlich während des Anschmelzens des ersten Kunststoffpulvers im Verfahrenschritt b) die Temperatur des Formwerkzeuges 200 bis 220°C, vorzugsweise 210°C beträgt, ein erstes leichtes "Anheften" und eine gerade beginnende leichte Koagulation des Sprühpulvers, die zwar ausreicht, um die Pulverteilchen ortsfest zu fixieren, jedoch ein "Durchschmelzen" noch nicht entstehen lässt.

Eine weitere vorteilhafte Ausbildung des Verfahrens besteht darin, dass zur vollständigen Reaktion und Verschmelzung des ersten und zweiten Kunststoffpulvers zu einer homogenen Kunststoff-Formhaut im Verfahrenschritt f) die Temperatur des Formwerkzeuges 225 bis 240°C, vorzugsweise 235°C beträgt. Dadurch erfolgt nun zusammen mit dem zweiten Kunststoffpulver ein ausreichender Wärmeeintrag zur vollständigen Schmelzung und Koagulation und damit zur Ausbildung einer homogenen Kunststoff-Formhaut aus mehreren Schichten / Farben.

Eine weitere vorteilhafte Ausbildung des Verfahrens besteht darin, dass die an den Stegen aufliegende Dichtung der Abdeckung oder Maske schaltbar in eine Abdichtposition überführt wird, wie dies insbesondere mit der weiter unten geschilderten Anordnung der Dichtung innerhalb einer Nut und ihrer Bewegung durch Dehnelemente (Schlauch) erreicht wird. Damit lässt sich die Abdeckung oder Maske zunächst ohne Verformung der Dichtung sicher an ihrem Platz an der Werkzeugform fixieren, ohne dass es durch Dichtungskräfte zur Verschiebung der Maske auf den Stegen kommen kann. Diese Maßnahme dient insbesondere bei einer hohen Automatisierung der sicheren Einhaltung der Toleranzen.

Eine weitere vorteilhafte Ausbildung des Verfahrens besteht darin, dass während des Pulversprühens im Verfahrenschritt a) das Formwerkzeugs nach unten geöffnet positioniert wird. Dadurch kann zum einen Überschüssiges Pulver ausfallen und zum anderen befindet sich die Werkzeugform gleich in der Position, in der leicht der Pulverkasten, das so genannte "Bucket" mit dem zweiten Kunststoffpulver, von unten an die Werkzeugform angeschlossen werden kann.

Eine zur Durchführung des erfindungsgemäßen Verfahrens besonders geeignete Vorrichtung ist dabei so ausgebildet, dass insbesondere die lateralen Abmessungen der Abdeckung oder Maske die Wärmedehnungen des Formwerkzeuges kompensierend beinhalten. Bei den für den Sinterprozess erforderlichen Temperaturen von 180 bis 250°C machen sich die durch Wärmeübergang nachfolgenden Dehnungen der Randbereiche der Abdeckungen stark bemerkbar und führen zu Undichtigkeiten, wenn nicht eine solche Kompensationsmaßnahme gleich bei der Konstruktion der Abdeckungen vorgesehen wird

Unterstützt wird dieser Vorteil dadurch, dass die Dichtung im Formgußverfahren hergestellt und somit an Form und Abmessung der Maske bzw. der Stege des Formwerkzeug angepasst ist. Dabei können die Dichtungen natürlich entweder vollständig oder nur in besonders gefährdeten Bereichen als Formguss-Dichtungen ausgebildet sein. Natürlich sollten auch die Dichtungsmaße die oben bereits geschilderte Kompensation der Wärmedehnungen beinhalten, um im Zusammenspiel bestmöglich zu dichten.

Die Dichtung ist in eine in der Abdeckung / der Maske befindliche Nut eingelegt und in letzterer bewegbar angeordnet, kann also etwa nach dem Fixieren der Abdeckung oder Maske in die endgültige Dichtposition geschoben werden. Dadurch werden Dehnungen und Spannungen, wie sie sonst durch das Pressen einer Dichtung beispielsweise beim Aufschrauben eines Deckels entstehen, vollkommen vermieden.

Die Dichtung ist durch einen auf ihrer Unterseite angeordneten dehnbaren Schlauch innerhalb der Nut beweglich. Somit bleibt die Dichtung selbst durch Positionierungsspannungen unbeeinflusst, was eine deutliche Verlängerung der Lebensdauer solcher Dichtungen zur Folge hat, wenn man sie etwa mit der Lebensdauer von aufblasbaren Dichtungen vergleicht, die von Positionierungsspannungen oder -kräften besonders stark beeinflusst werden.

Bei dem erfindungsgemäßen Verfahren und der hierin offenbarten Vorrichtung kann die Dichtung selbstverständlich auch nur teilweise und in besonders beanspruchten Bereichen in eine Nut eingelegt sein und auf restlicher Länge lediglich an Wandteilen anliegen.

Die Dichtungen sind vorteilhafterweise aus dauerelastischem und temperaturfestem Material hergestellt, vorzugsweise aus Polyurethan oder Silikonkautschuk. Hierdurch erreicht man auch über eine lange Anwendungszeit und thermische Wechselbelastungen eine saubere Kantenbildung zwischen den einzelnen Farb- bzw. Sinterbereichen. Natürlich sollten die Abdeckungen/Masken und auch die Dichtungen, Nuten etc. nach einer bestimmten Anzahl von Zyklen gereinigt werden.

Eine weitere vorteilhafte Ausbildung der Vorrichtung besteht darin, dass die Abdeckung oder Maske formschlüssig mit dem Formwerkzeug verriegelt ist, wobei die Verriegelung vorzugsweise unter der Maske angeordnet ist, so dass einerseits eine sichere und anderseits eine schnell zu erstellende und zu lösende Verbindung vorhanden ist, die sich für automatische Verfahren gut eignet, also beispielsweise für das Aufsetzen und Verriegeln der Abdeckung oder Maske mit einem Handhabungsroboter.

Die Abdeckungen oder Masken, wie auch die Werkzeugform selbst, können natürlich ein- oder mehrteilig ausgeführt sein, als beispielsweise mit lösbaren Klappen oder Schiebern versehen sein, um etwa ein gutes Entformen bei Hinterschnitten zu gewährleisten.

## Patentansprüche

1. Verfahren zur Herstellung von Kunststoff-Formhäuten, insbesondere für Kraftfahrzeuginnenteile wie z.B. Armaturenbretter und Türverkleidungen, wobei die Kunststoff-Formhäute durch ein nacheinander erfolgendes mehrfaches kontinuierliches Anschmelzen von mehreren Kunststoffpulvern unterschiedlicher Eigenschaft an Oberflächenbereichen eines erwärmten Formwerkzeuges aufgebaut werden und die mit Kunststoffpulver unterschiedlicher Eigenschaft versehenen Bereiche der Oberfläche durch auf der Oberfläche des Formwerkzeuges vorspringende Stege voneinander getrennt sind, wobei mindestens einer der durch die Stege begrenzten Bereiche der Oberfläche während eines Anschmelzen eines ersten Kunststoffpulvers mit einer Abdeckung oder Maske versehen wird, die in ihren Randbereichen mit einer Dichtung versehen ist und auf den Stegen aufliegt, wobei die Dichtung in eine in der Abdeckung / der Maske befindliche Nut eingelegt und in letzterer bewegbar angeordnet ist, wobei die Dichtung durch einen auf ihrer Unterseite angeordneten dehnbaren Schlauch innerhalb der Nut beweglich ist, wobei
a) zunächst das erste Kunststoffpulver mittels Pulversprühverfahren auf das Formwerkzeug aufgebracht, wobei das Formwerkzeug während des Sprühens auf einer ersten Temperatur gehalten wird,
b) die Temperatur des Formwerkzeuges danach so erhöht wird, dass das im Sprühverfahren aufgebrachte erste Kunststoffpulver an den nicht maskierten Bereichen des Formwerkzeuges durch Anschmelzen haftet,
c) die Abdeckung oder Maske von der Oberfläche des Formwerkzeuges entfernt wird,
d) das Formwerkzeug danach auf eine ein zweites Kunststoffpulver enthaltende Pulverwanne aufgesetzt und mit letzterer dicht verschlossen wird, wobei die Formoberfläche des Formwerkzeuges zum Innenraum der Pulverwanne zeigt,
e) Formwerkzeug und Pulverwanne so in Bewegung/Rotation gebracht werden, dass das zweite Kunststoffpulver über die Formoberfläche des Formwerkzeuges rieselt, wobei das zweite Kunststoffpulver durch Rotationssintern an der Formoberfläche des Formwerkzeuges und an dem ersten Kunststoffpulver durch Anschmelzen haftet,
f) die Temperatur des Formwerkzeuges so erhöht wird, dass das erste und das zweite Kunststoffpulver vollständig ausreagiert und zu einer homogenen Kunststoff-Formhaut verschmilzt,
g) das Formwerkzeug von der Pulverwanne entfernt und danach so gekühlt wird, dass die homogene Kunststoff-Formhaut aus dem Formwerkzeug entnommen werden kann.

2. Verfahren zur Herstellung von Kunststoff-Formhäuten nach Anspruch 1, **dadurch gekennzeichnet, dass**
die Kunststoffpulver als unterschiedliche Eigenschaft eine unterschiedliche Farbe aufweisen.

3. Verfahren zur Herstellung von Kunststoff-Formhäuten nach Anspruch 1 oder 2,
**dadurch gekennzeichnet, dass**
die Kunststoffpulver als unterschiedliche Eigenschaft eine unterschiedliche Dichte und / oder Schaumigkeit aufweisen.

4. Verfahren zur Herstellung von Kunststoff-Formhäuten nach Anspruch 1 bis 3,
**dadurch gekennzeichnet, dass**
während des Pulversprühens im Verfahrenschritt a) die Temperatur des Formwerkzeuges 190 bis 210°C, vorzugsweise 195°C beträgt.

5. Verfahren zur Herstellung von Kunststoff-Formhäuten nach Anspruch 1 bis 4,
**dadurch gekennzeichnet, dass**
während des Anschmelzens des ersten Kunststoffpulvers im Verfahrenschritt b) die Temperatur des Formwerkzeuges 200 bis 220°C, vorzugsweise 210°C beträgt.

6. Verfahren zur Herstellung von Kunststoff-Formhäuten nach Anspruch 1 bis 5,
**dadurch gekennzeichnet, dass**
zur vollständigen Reaktion und Verschmelzung des ersten und zweiten Kunststoffpulvers zu einer homogenen Kunststoff-Formhaut im Verfahrenschritt f) die Temperatur des Formwerkzeuges 225 bis 240°C, vorzugsweise 235°C beträgt.

7. Verfahren zur Herstellung von Kunststoff-Formhäuten nach Anspruch 1 bis 6,
**dadurch gekennzeichnet, dass**
die an den Stegen aufliegende Dichtung der Abdeckung oder Maske schaltbar in eine Abdichtposition überführt wird.

8. Verfahren nach Anspruch 1 bis 7,
**dadurch gekennzeichnet, dass**
während des Pulversprühens im Verfahrenschritt a) das Formwerkzeuges nach unten geöffnet positioniert wird.

## Claims

1. A method for producing plastic molded skins, particularly for motor vehicle interior parts such as for example instrument panels and door trim, wherein the plastic molded skins are built up by successive continuous melting of a plurality of different plastic powders of different properties on surface regions of a heated mold and the surface regions provided with the plastic powders of different properties are separated from one another by webs projecting from the surface of the mold, wherein while a first plastic powder is being melted on, at least one of the surface regions limited by the webs is provided with a covering or mask having a seal provided at its peripheral areas and resting on the webs, wherein the seal is inserted into a groove situated in the covering / mask and disposed within same so as to be movable, wherein the seal is movable within the groove by means of an expandable tube disposed on its underside, wherein
a) a first plastic powder is initially deposited onto the mold in a powder spraying process, wherein the mold is maintained at a first temperature during said spraying,
b) the temperature of the mold is thereafter increased such that the first plastic powder applied in the powder spraying process will adhere to the unmasked regions of the mold by fusing,
c) the covering or mask is removed from the surface of the mold,
d) the mold is thereafter placed atop a powder box containing a second plastic powder and tightly sealed to same, wherein the surface of the mold faces the interior of the powder box,
e) the mold and the powder box are set into motion/rotation such that the second plastic powder trickles over the surface of the mold, wherein the second plastic powder adheres by means of fusing to the surface of the mold and to the first plastic powder via rotational sintering,
f) the temperature of the mold is then increased such that the first and the second plastic powder react completely and fuse into a homogeneous plastic molded skin,
g) the mold is removed from the powder box and thereafter cooled such that the homogeneous plastic molded skin can be removed from the mold.

2. The method for producing plastic molded skins according to claim 1, **characterized in that** the different properties of the plastic powders are different colors.

3. The method for producing plastic molded skins according to claim 1 or 2, **characterized in that** the different properties of the plastic powders are different densities and/or different foaminess.

4. The method for producing plastic molded skins according to claim 1 to 3, **characterized in that** the temperature of the mold is at 190° to 210° C, preferably 195° C, during the powder spraying in method step a).

5. The method for producing plastic molded skins according to claim 1 to 4, **characterized in that** the temperature of the mold is at 200° to 220° C, preferably 210° C, during the fusing of the first plastic powder in method step b).

6. The method for producing plastic molded skins according to claim 1 to 5, **characterized in that** the temperature of the mold is at 225° to 240° C, preferably 235° C, in method step f) so as to enable the complete reaction and fusion of the first and second plastic powder into a homogeneous plastic molded skin.

7. The method for producing plastic molded skins according to claim 1 to 6, **characterized in that** the seal of the covering or mask resting on the webs is switchably conveyed into a sealing position.

8. The method according to claim 1 to 7, **characterized in that** the mold is positioned so as to be downwardly open during the powder spraying in method step a).

## Revendications

1. Procédé pour la fabrication de peaux moulées en matière plastique, en particulier pour pièces intérieures de véhicules automobiles comme par exemple tableau de bord et habillage de porte, dans lequel les peaux moulées en matière plastique sont constitués par mise en fusion continue multiple, effectuée successivement, de plusieurs poudres en matière plastique ayant des propriétés différentes sur des zones de surface d'un outil de moulage chauffé et les zones de la surface pourvues de poudres de matière plastique ayant des propriétés différentes sont séparées les unes des autres par des barrettes en saillie sur la surface de l'outil de moulage, et l'une au moins des régions de la surface délimitée par les barrettes est dotée d'un recouvrement ou d'un masque pendant la mise en fusion d'une première poudre en matière plastique, recouvrement ou masque qui est doté d'un joint dans ses zones de bordure et repose sur les barrettes, le joint étant mis en place dans une gorge ménagée dans le recouvrement/le masque et est agencé déplaçable dans cette gorge, dans lequel le joint est déplaçable à l'intérieur de la gorge au moyen d'un tuyau extensible agencé sur sa face inférieure, dans lequel
a) tout d'abord, la première poudre en matière plastique est appliquée sur l'outil de moulage au moyen d'une procédure de pulvérisation de poudre, alors que l'outil de moulage est maintenu à une première température pendant la pulvérisation,
b) ensuite, la température de l'outil de moulage est augmentée de telle façon que la première poudre en matière plastique appliquée dans la procédure de pulvérisation adhère par fusion sur les zones non masquées de l'outil de moulage,
c) le recouvrement ou le masque est enlevé de la surface de l'outil de moulage,
d) ensuite, l'outil de moulage est posé sur une cuve de poudre contenant une seconde poudre en matière plastique et est refermé de manière étanche avec celle-ci, de sorte que la surface de moulage de l'outil de moulage est tournée vers le volume intérieur de la cuve de poudre,
e) l'outil de moulage et la cuve de poudre sont amenés en mouvement/rotation de telle façon que la seconde poudre en matière plastique s'écoule sur la surface de moulage de l'outil de moulage, la seconde poudre en matière plastique adhérant par fusion sur la surface de moulage de l'outil de moulage et sur la première poudre en matière plastique par un phénomène de frittage-rotation,
f) la température de l'outil de moulage est augmentée de telle façon que la première et la seconde poudre matière plastique réagissent totalement et fusionnent pour donner une peau moulée en matière plastique homogène,
g) l'outil de moulage est enlevé de la cuve de poudre et ensuite refroidi de telle façon que la peau moulée en matière plastique homogène peut être enlevée hors de l'outil de moulage.

2. Procédé pour la fabrication de peaux moulées en matière plastique selon la revendication 1, **caractérisé en ce que** les poudres de matière plastique présentent, à titre de propriété différente, une couleur différente.

3. Procédé pour la fabrication de peaux moulées en matière plastique selon la revendication 1 ou 2, **caractérisé en ce que** les poudres en matière plastique présentent, à titre de propriété différente, une densité et/ou un moussage différent.

4. Procédé pour la fabrication de peaux moulées en matière plastique selon la revendication 1 à 3, **caractérisé en ce que** pendant la pulvérisation de poudre dans l'étape de procédé a) la température de l'outil de moulage s'élève à 190 à 210° C, de préférence 195° C.

5. Procédé pour la fabrication de peaux moulées en matière plastique selon la revendication 1 à 4, **caractérisé en ce que** pendant la mise en fusion de la première poudre de matière plastique dans l'étape de procédé b) la température de l'outil de moulage s'élève à 200 à 220° C, de préférence 210° C.

6. Procédé pour la fabrication de peaux moulées en matière plastique selon la revendication 1 à 5, **caractérisé en ce que** pour provoquer une réaction totale et un fusionnement de la première et de la seconde poudre de matière plastique pour donner une peau moulée en matière plastique homogène dans l'étape de procédé f) la température de l'outil de moulage s'élève à 225 à 240° C, de préférence 235° C.

7. Procédé pour la fabrication de peaux moulées en matière plastique selon la revendication 1 à 6, **caractérisé en ce que** le joint du recouvrement ou du masque reposant sur les barrettes est transféré de façon commutable jusque dans une position d'étanchement.

8. Procédé selon la revendication 1 à 7, **caractérisé en ce que** pendant la pulvérisation de poudre dans l'étape de procédé a) l'outil de moulage est positionné en étant ouvert vers le bas.
